# EUROPEAN PATENT APPLICATION

(11) **EP 2 613 605 A1**
(43) Date of publication of application: **10.07.2013**
(21) Application number: 10856590.4
(22) Date of filing: 03.09.2010
(51) Int. Cl.: H04W 80/02

(54) **METHOD, TERMINAL DEVICE AND BASE STATION DEVICE FOR TRANSMITTING UPLINK RESPONSE SIGNALS**

(71) Applicant: Fujitsu Limited, Kawasaki-shi, Kanagawa 211-8588 (JP)
(72) Inventor: LAN, Yuanrong, Beijing 100025 (CN); ZHANG, Yi, Beijing 100025 (CN); ZHANG, Yuantao, Beijing 100025 (CN); ZHOU, Hua, Beijing 100025 (CN); WU, Jianming, Beijing 100025 (CN)
(74) Representative: Ward, James Norman
(86) International application number: PCT/CN2010/076603
(87) International publication number: WO 2012/027903

(57) **Abstract**

A method for transmitting uplink response signals is provided. In the method, at the terminal device side, the signal which represents whether the transmission block is received correctly is sent in Physical Uplink Control Channel (PUCCH) corresponding to the specific transmission block, so that a Base Station (BS) is informed which transmission blocks are received correctly. The base station device side determines that the transmission blocks excluding the transmission blocks which are determined to be received correctly are retransmitted according to the feedback response signals instead of retransmitting all the transmission blocks, thus improving the efficiency of data transmission, reducing the unnecessary retransmission, and benefiting full use of the communication resources. The related terminal device and base station device for implementing the method are also provided.

## Description

### FIELD OF THE INVENTION

The disclosure generally relates to a technical field of communication, and particularly to a method for transmitting an uplink response signal in a multi-carrier communication system, related terminal equipment, and base station equipment.

### BACKGROUND OF THE INVENTION

Physical Uplink Control Channel (PUCCH) in Long Term Evaluation (LTE) system is used to transmit uplink control information, which includes a response signal ACK/NACK/DTX (DTX: discontinuous transmission) for downlink data, channel state information CSI, etc., wherein ACK indicates that data are received correctly, NACK indicates that data are received incorrectly , DTX indicates that no downlink control data are received, that is, no control command for dispatching downlink data transmission is received. Response signals transmitted in PUCCH correspond to a physical channel resource, a time domain sequence and a frequency domain sequence, respectively. The three resources are all associated with a first Control Channel Element (CCE) of the Physical downlink control channel (PDCCH) dispatching the downlink data corresponding to the response signal.

As to the LTE FDD system, uplink subframes correspond to downlink subframes, that is, for any user equipment (UE) in the system, one uplink subframe transmits only a response signal value of one downlink subframe data corresponding thereto. Data transmitted in one downlink subframe includes at most two transport blocks (TB), that is, having two-bit response signal. Before retransmission, the two-bit needs to be modulated into QPSK symbol, and then mapped to a corresponding physical resource and sequence resource.

As to the LTE TDD system, in most cases uplink subframes correspond to downlink subframes in one to multiple manner, that is, for any UE in the system, one uplink subframe needs to transmit response signal values of a plurality of downlink subframes corresponding thereto.

In the LTE TDD system, to feedback an uplink response signal, there are basically two methods. One is called as channel selection, wherein the method transmits response signals corresponding to a plurality of downlink subframe data in one uplink subframe, that is, transmitting uplink response signals corresponding to each of the downlink subframes in one uplink subframe, so whether there is a need of retransmitting a specific downlink subframe may be determined according to information corresponding to each downlink subframe in the uplink response signal. The second method is called as ACK/NACK Bundling.

The channel selection method is mainly applied to users in a non-marginal community, and scenes in non TDD configuration 5. In those cases, the communication condition is much better, so it is possible to transmit an uplink response signal for each downlink subframe.

The ACK/NACK Bundling method is mainly applied to users in a marginal community, and scenes in TDD configuration 5 in which an uplink response signal corresponding to nine downlink data frames needs to be transmitted in one uplink subframe, so the communication burden is much heavier. In the above cases, the communication condition is bad, so it is not quite possible to transmit an uplink response signal for each downlink subframe, and ACK/NACK Bundling needs to be executed.

The ACK/NACK Bundling is defined as: a result of a logic "AND" operation of transmitting ACK/NACK of all transport blocks or data packets transmitted in a downlink subframe corresponding to the uplink subframe in one uplink subframe. For example, 4 downlink subframes corresponding to one uplink subframe send 4 transport blocks to one UE, if one of the transport blocks cannot be decoded correctly, NACK is fed back, and if four transport blocks are decoded correctly, ACK is fed back.

However, the following case may occur: 3 of the 4 transport blocks are transmitted correctly, while one transport block is transmitted incorrectly, if NACK is fed back at this time, three transport blocks that have been transmitted correctly may be retransmitted once.

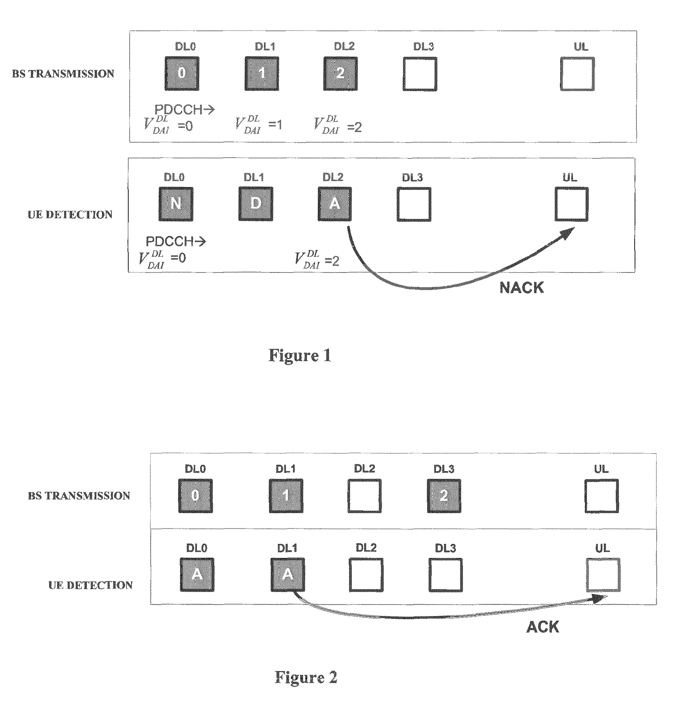

In relevant provisions of LTE Rel. 8, a missing detection is detected by using 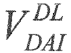 and by feeding back ACK/NACK in the PUCCH corresponding the last detected transport block. As shown in Figure 1, when the base station transmits data to one UE in the former 3 downlink subframes, the PDCCH corresponding to the three data includes two-bit instructions 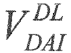 indicating how many transport blocks up to the current transport block are transmitted in the 4 downlink subframes. UE finds that only one transport block is detected and a corresponding value of 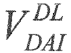 is 2, and knows that two transport blocks have been lost previously, so even if the transport block is detected correctly, NACK, instead of ACK, is fed back. After receiving the NACK, BS retransmits all transport blocks. For the sake of conciseness, the parameter 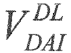 is referred to as "V" for short hereinafter.

Also in relevant provisions of LTE Rel.8, as shown in Figure 2, if BS transmits 3 transport blocks, but UE receives only the former two transport blocks and receives no transport block in latter two downlink subframes, it is not clear whether BS transmits no transport block in the two subframes, or UE receives no information transmitted by PDCCH corresponding to the transport block, so it is impossible to decode. If the received two transport blocks are received correctly, UE transmits ACK on the PUCCH corresponding to one transport block lastly received. BS looks forward to receiving ACK/NACK information in the PUCCH corresponding to the transport block in downlink subframe DL3, if it receives no ACK/NACK information, BS knows that the last one transport block is undetected, and then all transport blocks are retransmitted.

Figures 1 and 2 describe two rules for detecting a missing detection in LTE Rel. 8, that is, finding a missing detection by 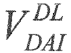 (expect for the missing detection of the last one transport block), and by ACK/NACK fed back in PUCCH corresponding to one transport block last detected, detecting whether the last one transport block is undetected.

As can be seen from relevant descriptions of the background art, the method of transmitting uplink response information by bundling provided in the current LTE Rel. 8 causes unnecessary retransmission, for example, in the case that the receiving condition of the transport block is ACK, ACK, ACK, NACK in the downlink sub frame, only one transport block marked as "NACK" is actually received incorrectly, but all transport blocks need to be retransmitted.

### SUMMARY OF THE INVENTION

A brief summary about the present disclosure is provided hereinafter to provide basic understandings related to some aspects of the present disclosure. It shall be understood that this summary is not an exhaustive summary related to the present disclosure. The summary is not intended to determine a key part or an important part of the present disclosure, nor does it intend to limit the scope of the present disclosure. The purpose of the summary is only to provide some concepts in simplified forms to prelude more detailed descriptions discussed later

In view of the defects in the exiting technology, it is urgent to provide a technical solution of reducing as much as possible the retransmission of the transport block to improve the efficiency of the downlink data transmission.

The method and equipment for transmitting an uplink response signal according to an embodiment of the disclosure, a signal indicative of a special meaning is transmitted by UE through PUCCH corresponding to a specific transport block, to inform BS about which transport block is received correctly. Therefore, BS needs to transmit only other transport blocks expect for the transport blocks that have been received correctly, and there is no need of retransmitting all transport blocks, thereby improving the data transmission efficiency and reducing unnecessary retransmission. This facilitates to make full use of the communication resources. Especially in the case of poorer communication condition, for example, for users in marginal community and scenes in TDD configuration 5, the solution can particularly obtain significantly beneficial effects.

According to an embodiment of the disclosure, there is provided a method for transmitting an uplink response signal in a communication system, comprising: detecting, by a terminal equipment, the reception situation of at least one transport block transmitted by a base station equipment in a predetermined order via at least one downlink subframe, and generating, by the terminal equipment, with respect to each transport block, a correct reception indicator (ACK) indicating that the transport block is received correctly, an incorrect reception indicator (NACK) indicating that the transport block is not received correctly, or another indicator indicating any other reception situation, according to the reception situation;
generating, by said terminal equipment, an uplink response signal according to the position and the amount of the generated correct reception indicator or indicators in an indicator sequence, determining, by said terminal equipment, which transport block corresponds to the physical uplink control channel (PUCCH) through which said uplink response signal is to be fed back, and feeding back, by said terminal equipment, said uplink response signal to said base station equipment through the determined PUCCH via one uplink subframe corresponding to said at least one downlink subframe, wherein said indicator sequence consists of the correct reception indicator, the incorrect reception indicator and the another indicator, which are generated by said terminal equipment, in said predetermined order; and
selectively transmitting, by said base station equipment, a specific transport block of said at least one transport block based on the fed back uplink response signal.

According to another embodiment of the disclosure, there is provided a terminal equipment, comprising:
a detecting unit configured to detect the reception situation of at least one transport block transmitted by a base station equipment in a predetermined order via at least one downlink subframe, and to generate, with respect to each transport block, a correct reception indicator (ACK) indicating that the transport block is received correctly, an incorrect reception indicator (NACK)) indicating that the transport block is not received correctly, or another indicator indicating any other reception situation, according to the reception situation;
an uplink response signal generating and feeding back unit configured to generate an uplink response signal according to the position and the amount of the generated correct reception indicator or indicators in an indicator sequence, to determine which transport block corresponds to the physical uplink control channel (PUCCH) through which said uplink response signal is to be fed back, and to feed back said uplink response signal to said base station equipment through the determined PUCCH via one uplink subframe corresponding to said at least one downlink subframe, wherein said indicator sequence consists of the correct reception indicator, the incorrect reception indicator and the another indicator, which are generated by said detecting unit, in said predetermined order.

According to another embodiment of the disclosure, there is provided a base station equipment, comprising:
a data transmitting unit configured to transmit at least one transport block to a terminal equipment in a predetermined order via at least one downlink subframe;
a data reception situation deciding unit configured to decide which of said at least one transport block is received by said terminal equipment correctly, according to an uplink response signal fed back by said terminal equipment through a corresponding physical uplink control channel PUCCH via one uplink subframe corresponding to said at least one downlink subframe; and
wherein said data transmitting unit selectively retransmits the transport block or blocks not decided by said data reception deciding unit as received correctly.

According to another embodiment of the disclosure, there is provided a communication system, comprising at least one terminal equipment, and a base station equipment which can perform communication with said at least one terminal equipment, each of said at least one terminal equipment is configured to implement the method for transmitting an uplink response signal in the communication system with the base station equipment.

According to other embodiments of the disclosure, there is provided a program product comprising machine readable instruction codes stored therein, wherein the instruction codes, when read and executed by a computer, are capable of executing the method for transmitting uplink response signal.

According to other embodiments of the disclosure, there is further provided a machine readable storage medium with the program product.

Transmitting an uplink response signal by the equipment and method according to the disclosure may be benefited from the following: reducing unnecessary retransmission of transport block received correctly, thereby improving downlink data transmission efficiency, improving utilizing efficiency of bandwidth and enhancing the throughput of the whole system.

### BRIEF DESCRIPTION OF THE DRAWINGS

The above and other objects, features and advantages of the disclosure may be understood more easily by referring to description of the embodiments of the disclosure in conjunction with the Drawings. Components in the Drawings are not drawn in ratio, and are only for illustrating principle of the disclosure. To show and describe some portions of the disclosure, corresponding sections in the Drawings may be enlarged, that is, corresponding sections are made larger than other components in the example device actually manufactured according to the disclosure. In the Drawings, the same or similar technical feature or component is represented by the same or similar reference sign.

Figure 1 is a schematic view showing a missing detection detected at UE in the uplink response signal bundling transmission provided in the provision of LTE Rel. 8;

Figure 2 is a schematic view showing that there is one missing detection at UE, but the missing detection is not detected in the uplink response signal bundling transmission provided in the provision of LTE Rel. 8;

Figure 3 is a flowchart illustrating the method for transmitting an uplink response signal according to an embodiment of the disclosure;

Figures 4 and 5 show an implementation process of two specific examples in one implementing manner of the method shown in Figure 3, wherein at UE, in the forward direction, at least one transport block is detected as received correctly;

Figures 6 and 7 show an implementation process of another two specific examples in one implementing manner of the method shown in Figure 3, wherein at UE, in the backward direction, at least one transport block is detected as received correctly;

Figure 8 shows an implementation process of another specific example in one implementing manner of the method shown in Figure 3, wherein UE feeds back no uplink response signal to BS;

Figure 9 shows still an implementation process of another specific example in one implementing manner of the method shown in Figure 3, wherein in both the forward direction and the backward direction, at UE at least one transport block is detected as received correctly;

Figure 10 and Figures 11A-11B show an implementation process of two specific examples of another embodiment of the method shown in Figure 3, wherein BS transmits two transport blocks to UE in one downlink subframe, and at UE, start transport blocks of two code words both are detected as received correctly;

Figure 12 shows an implementation process of another specific example of another embodiment of the method shown in Figure 3, wherein BS transmits two transport blocks to UE in one downlink subframe, and at UE, start transport block of one of the two code words is detected as received correctly;

Figure 13 shows an implementation process of another specific example of another embodiment of the method shown in Figure 3, wherein BS transmits two transport blocks to UE in one downlink subframe, and at UE, start transport blocks of the two code words both are detected as received incorrectly;

Figure 14 is a structure simplifying block diagram illustrating a terminal equipment for implementing feedback of an uplink response signal according to an embodiment of the disclosure;

Figure 15 is a structure simplifying block diagram illustrating a base station transmitting data according to the uplink response signal fed back by the terminal equipment according to an embodiment of the disclosure;

Figure 16 is a structure simplifying view of a universal computer system for implementing the equipment and the method according to an embodiment of the disclosure; and

Figure 17 is a structure simplifying view illustrating a communication system according to an embodiment of the disclosure, wherein the method of transmitting an uplink response signal in the communication system according to an embodiment of the disclosure may be executed between the base station equipment and the moving terminal in the system.

### DETAILED DESCRIPTION OF THE INVENTION

The embodiments of the present disclosure are discussed hereinafter in conjunction with the Drawings. Elements and features described in one Drawing or one embodiment of the present disclosure may be combined with elements and features described in one or more other Drawings or embodiments. It shall be noted that representation and description of components and processes unrelated to the present disclosure and well known to one of ordinary skill in the art are omitted in the Drawings and the Description for the purpose of clearness.

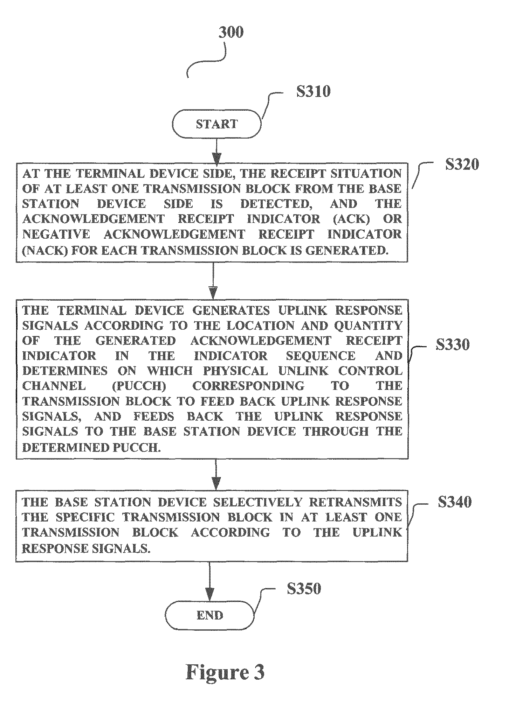

Figure 3 is a flowchart illustrating a method 300 for transmitting an uplink response signal in a communication system according to an embodiment of the disclosure. The method 300 starts from step S310. At step S320, detect, by a terminal equipment (for example, a use equipment UE), the reception situation of at least one transport block transmitted by a base station equipment in a predetermined order via at least one downlink subframe, and generate, with respect to each transport block, a correct reception indicator (ACK) indicating that the transport block is received correctly, an incorrect reception indicator (NACK) indicating that the transport block is not received correctly, or another indicator indicating any other reception situation (for example "D", blank, etc.), according to the reception situation. At step S330, generate, by the terminal equipment, an uplink response signal according to the position and the amount of the generated correct reception indicator or indicators in an indicator sequence, and determine which transport block corresponds to the physical uplink control channel (PUCCH) through which said uplink response signal is to be fed back, and feedback the uplink response signal to the base station equipment through the determined PUCCH via one uplink subframe corresponding to the at least one downlink subframe, wherein the indicator sequence consists of the correct reception indicator, the incorrect reception indicator and the another indicator, which are generated by the terminal equipment, in the predetermined order. At step S340, selectively retransmit by the base station equipment a specific transport block of at least one transport block based on the fed back uplink response signal.

As can be seen from the above, the method for transmitting an uplink response signal according to an embodiment of the disclosure may determine the position for feeding back uplink response signal and the content of the uplink response signal to be fed back according to a detection result of the reception situation of each transport detected at the terminal equipment, such that the base station equipment may selectively retransmit a transport block, thereby reducing unnecessary retransmission of a transport block that has been received correctly, facilitating to improve utilization efficiency of wireless resources and enhancing throughput of a system.

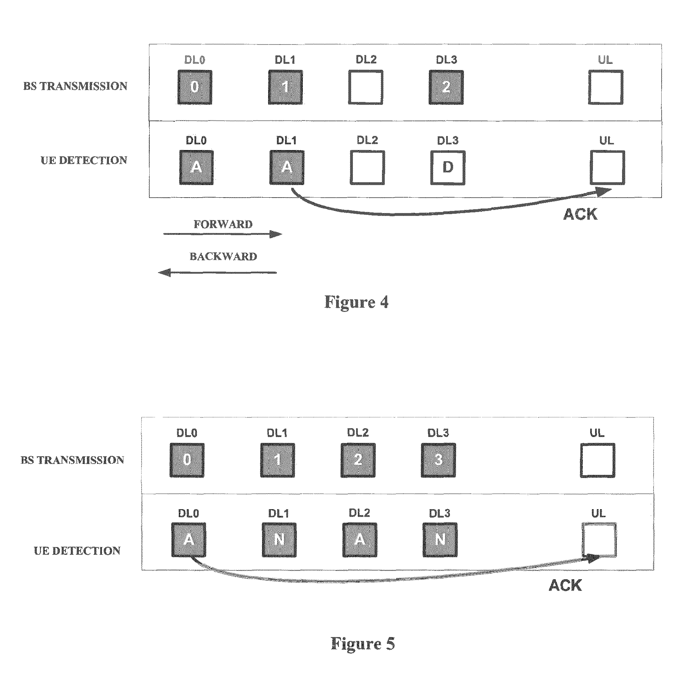

Some process environments and conditions are provided, prior to the detail description of specific processes and operations involved in each embodiment of the disclosure to facilitate clear description of subsequent description. For example, as to the reception situation of each transport block detected by the terminal equipment, the following may be set: a correct reception indicator (ACK, hereinafter referred to as "A" sometimes) indicating that the transport block is received correctly, an incorrect reception indicator (NACK, hereinafter referred to as "N" sometimes) indicating that the transport block is not received correctly, or another indicator indicating any other reception situation. Here, "another indicator" for example may be an indicator "D" indicating that a corresponding transport block is undetected (for example see Figure 1), the base station equipment transmits a transport block but the terminal equipment fails to detect the undetected "Blank" indicator (for example see Figure 2), and so on. One indicator sequence is generated through those indicators, for example, "N, D, A" in Figure 1, "A, A, Blank" in Figure 2. And the direction of the indicator sequence generated at the terminal equipment is set as follows: a direction from the first indicator to the last indicator in the indicator sequence indicates a forward direction while an opposite direction thereof indicates a backward direction. In addition, for the sake of clear description, take one data transmission process between the base station and terminal equipment as an example in the later detail description. It is set in the one data transmission that a transport block is transmitted from the base station to the terminal equipment via at least one downlink subframe, and the terminal equipment feeds back a corresponding signal to the base station through one uplink subframe corresponding to the at least one downlink subframe. Of course, the technical solution of the disclosure described by referring to an embodiment in the Description may be applied to each data transmission process or any required numbers of data transmission between the base station and the terminal equipment. Again, although description is given by taking a data transmission process between one base station and one terminal equipment as an example, it is easily understood that the technical solution described in accordance an embodiment of the disclosure may be applied to scenes of a plurality of terminal equipments or scenes of a plurality of base stations. It is further pointed out that the above provided conditions are applicable for the provided detail descriptions referring to Figures 4-13, and for the sake of conciseness, those provided conditions are omitted when describing in detail the Figures later. Of course, those skilled in the art appreciate that the above specific settings are illustrative and are not intended for limiting the scope of protection of the disclosure. If there is other similar scene to which the technical solution described in accordance with the embodiment of the disclosure is suitably applied, it shall be deemed that various elements involved in the application scenes are covered by the scope of protection of the disclosure,

In a specific implementation manner of the method 300 shown in Figure 3, each transport block is transmitted via one of at least one downlink subframe from the base station to the terminal equipment, and by the following process the method generates an uplink response signal and determines which transport block corresponds to the physical uplink control channel (PUCCH) through which the uplink response is to be fed back.

Under the above provided conditions, the terminal equipment (for example a user equipment UE) performs the following processes:
■ if it is found that the indicator sequence begins with an ACK
   ◆ ACK is fed back through a PUCCH corresponding to a transport block related to last ACK of at least one continuous ACK in the forward direction which begins with the ACK to inform BS that starting from the last ACK, all indicators (including the last ACK) that are continuous in the backward direction are ACK, that is, UE informs BS that all transport blocks related to those continuous ACK are received correctly. Here, ACK fed back as uplink response signal in this case may be called as "forward correct reception signal".
■ if it is found that the indicator sequence does not begin with an ACK
   ◆ if an indicator related to a transport block in the last one downlink subframe of at least one downlink subframe is ACK, then:
      ● NACK is fed back through a PUCCH corresponding to a transport block related to last ACK of at least one continuous ACK in the backward direction which begins with the ACK to inform BS that starting from the last ACK, all continuous indicators (including the last ACK) in the forward direction are ACK, that is, UE informs BS that all transport blocks related to those continuous ACK are received correctly. Here, NACK fed back as uplink response signal in this case may be called as "backward correct reception signal"
   ◆ if an indicator related to a transport block in the last one downlink subframe of at least one downlink subframe is not ACK, then:
      ● feed back nothing.

Under the above provided conditions, the base station equipment performs the following processes according to the uplink response signal fed back by the terminal equipment:
■ if uplink response signal ACK fed back by US is received, then deciding at UE that a transport block corresponding to a PUCCH for transmitting the ACK and all transport blocks from the transport block in backward direction are received correctly, and retransmitting remaining transport block or blocks not decided as received correctly.
■ if NACK is received, then deciding at UE that a transport block corresponding to a PUCCH for transmitting the NACK and all transport blocks from the transport block in the forward direction are received correctly, and retransmitting remaining transport block or blocks not decided as received correctly.
■ if there is nothing received, then deciding no transport block is received correctly, and retransmitting all transport blocks.

As can be seen from the above descriptions, the terminal equipment generates an uplink response signal ACK or NACK according to the position and the amount of the generated correct reception indicator or indicators related to each transport block in an indicator sequence (for example, whether an indicator sequence begins with an ACK, an whether an indictor related to a transport block in last one downlink subframe in the at least one downlink subframe is ACK, whether ACKs are continuous with respect to one to another, and the number of the continuous ACK, and so on). Those uplink response signals further include direction information, for example, ACK indicates that all continuous transport blocks from the transport block related to PUCCH for transmitting the ACK in the backward direction are received correctly, NACK indicates that all transport blocks from the transport block related to PUCCH for transmitting the NACK in the forward direction are received correctly. It needs to point out that due to presence of the parameter V, whether ACK in the indicator sequence is continuous may be determined, that is, whether a corresponding transport block is continuous may be determined by the parameter, and then whether an indicator corresponding to those transport blocks is continuous may be determined, if the transport blocks are continuous, the corresponding indicators are continuous.

It is easily understood that other than ACK, NACK, information in any other form allowed by the system may be used as the generated uplink response information, and it may be regulated from actual requirements that different uplink response signal indicates different meaning. In addition, the PUCCH through which the uplink response signal is transmitted may be determined according to information on the position and the amount of the correct indicator. For example, in the embodiment, an uplink response information is transmitted by PUCCH corresponding to a transport block related to the last ACK of a continuous ACK. Of course, other PUCCH may be determined from actual requirements for transmitting uplink response information, and it may be regulated that BS may be informed of different information by different PUCCH transmission. That is, the terminal equipment may inform BS of different information by selecting different PUCCH and transmitting ACK/NACK as uplink response information on the channel. Accordingly, the base station equipment may retransmit a specific transport block not decided as received correctly according to the uplink response signal fed back by the terminal equipment, thereby reducing effectively unnecessary retransmission of all transport blocks.

Processes of the method according to an embodiment of the disclosure will be described hereinafter by some specific examples.

Figures 4 and 5 show an implementation process of two specific examples of the specific embodiment of the method shown in Figure 3, wherein, at UE, at least one transport block is detected as received correctly in the forward direction. As shown in the Figures, UL represents an uplink subframe, DL represents a downlink subframe. And BS (base station) transmits a transport block to UE in the order of DL0, DL1, DL2, DL3. At UE, if it is detected that the transport block from BS is received correctly, a correct reception indicator "ACK" is generated for the transport block, if no correct reception is detected, an incorrect reception indicator "NACK" is generated for the transport block. Accordingly, an indicator sequence is composed of a correct reception indicator or an incorrect reception indicator NACK generated for each transport block at UE, for example, in Figure 4 it is indicator sequence "A, A, D" that is generated for a transport block corresponding to downlink subframes DL0, DL1, DL3, in Figure 5, it is an indicator sequence "A, N, A, N" that is generated for a transport block corresponding to downlink subframes DL0, D11, DL2, DL3. It needs to note that letters "A", "N". "D" in the Figures represent the foregoing "ACK", "NACK", "DTX", respectively, numbers "0", "1", "3", "4" represent a serial number of continuousness of a transport block represented by parameter V For the sake of conciseness, the parameter V is only described in Figure 1, and the parameter is applicable in configurations shown in Figures 2-13. As to the meaning of the parameter, please refer to description of related rules in LTE Rel. 8 given by referring to Figure 1. Return back to Figures 4 and 5, it is regulated that a direction from the first indicator to the last indicator indicates a forward direction, while an opposite direction indicates a backward direction. Take Figure 4 as an example, at UE, a direction from an indicator A corresponding to DL0 to an indicator A corresponding to DL1 indicates a forward direction, while a direction from an indicator A corresponding to DL1 to an indicator A corresponding to DL0 indicates a backward direction, directions being shown schematically by arrows in the Figures. It is easily understood that the direction is regulated illustratively rather than restrictively, and the direction may be defined suitably as long as UE and BS side are aware of the meaning of the direction in advance. Meanings of letters, numbers and the regulation of the direction are also applicable for Figures 5-13.

In the situation shown in Figure 4, the indicator sequence as a detection result at UE begins with an ACK, and there are two continuous ACK in the forward direction. Therefore, in PUCCH_1 related to the last ACK, ACK is fed back as an uplink response signal. According to the above regulated process, BS is aware of correct reception of the first two transport blocks, and thus retransmits only the last one transport block, that is, a transport block related to a subframe DL3.

In the situation shown in Figure 5, an indicator sequence as a detection result at UE begins with an ACK, there is only one continuous ACK in the forward direction, that is, the ACK per se. Therefore, an ACK is fed back in PUCCH_0 related to the ACK. According to the above regulated process, BS knows that the first one transport block is received correctly at UE, and thus retransmits only last three transport blocks, that is, transport blocks related to subframes DL1-DL3.

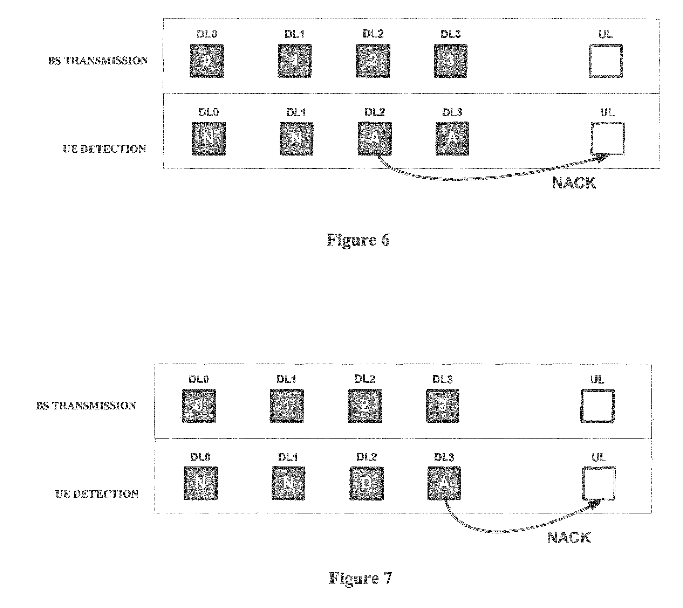

Figures 6 and 7 show an implementation process of another two specific examples of the specific embodiment of the method shown in Figure 3, wherein at UE, at least one transport block is detected as received correctly in the backward direction.

In the situation shown in Figure 6, the indicator sequence as a detection result at UE does not begin with an ACK, instead, an indicator related to a transport block of the last one downlink subframe of the at least one downlink subframe (in the example, 4 downlink subframes), that is, in downlink subframe DL3, is an ACK, and there are two continuous ACK in the backward direction. Therefore, in PUCCH_2 related to the last ACK of the continuous ACK, NACK is fed back as an uplink response signal. According to the above regulated process, BS is aware of correct reception of the last two transport blocks, and thus retransmits only the first two transport blocks, that is, transport blocks related to subframes DL0-DL1.

In the situation shown in Figure 7, an indicator sequence as a detection result at UE does not begin with an ACK, instead, an indicator related to a transport block of the last one downlink subframe of the at least one downlink subframe (in the example, 4 downlink subframes), that is, in downlink subframe DL3, is an ACK, and there is only one continuous ACK in the backward direction, that is, the ACK per se. Therefore, an NACK is fed back in PUCCH_3 related to the ACK as an uplink response signal. According to the above regulated process, BS knows that the last one transport block is received correctly at UE, and thus retransmits only the first three transport blocks, that is, transport blocks related to subframes DL0-DL2.

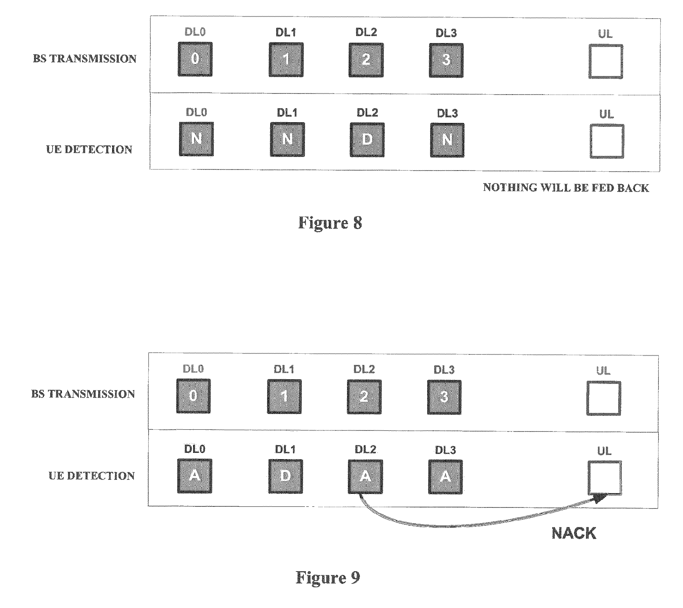

Figure 8 shows an implementation process of another specific example of the specific embodiment of the method shown in Figure 3, wherein UE feeds back no uplink response signal to BS. Specifically, the indicator sequence as a detection result at UE does not begin with an ACK, the indicator related to a transport block of the last one downlink subframe of the at least one downlink subframe (in the example, 4 downlink subframes), that is, in downlink subframe DL3, is not an ACK, either, UE feeds back nothing, and according to the above regulated processes, BS retransmits all transport blocks.

Figure 9 is a schematic view showing an implementation process of still another specific example of the specific embodiment of the method shown in Figure 3, wherein at UE, in both the forward direction and the backward direction, at least one transport block is detected as received correctly. Specifically, if the situation shown in Figure 9 occurs, according to the above process, ACK may be fed back in PUCCH_0, for indicating a correct transmission of the first transport block. However, it is more desirable that NACK is fed back in PUCCH_2 to inform BS that the last two transport blocks are received correctly, and in this case, the amount of the retransmission may be reduced as far as possible. Therefore, the above regulated processes may be further improved in the following manner:

The terminal equipment (for example, a user equipment UE) performs the following processes:
■ if it is found that the indicator sequence begins with an ACK
   ◆ if an indicator related to a transport block in the last one downlink subframe of at least one downlink subframe is not an ACK, then the process is similar to the above, that is, feeding back a forward correct reception signal ACK through a specific PUCCH.
   ◆ if an indicator related to a transport block in the last one downlink subframe of at least one downlink subframe is an ACK, then the amount of the forward continuous ACK is compared with the amount of the backward continuous ACK, if the amount of the forward continuous ACK is larger than or equal to the amount of the backward continuous ACK, a forward correct reception signal ACK is fed back according to the above process; otherwise, a backward correction reception signal NACK is fed back according to the above process.
■ if it is found that the indicator sequence does not begin with an ACK
   ◆ if an indicator related to a transport block in the last one downlink subframe of at least one downlink subframe is an ACK, then
      ● the process is similar to the above, that is, feeding a back forward correct reception signal NACK through a specific PUCCH.
   ◆ if an indicator related to a transport block in the last one downlink subframe of at least one downlink subframe is not an ACK, then
      ● the process is similar to the above, that is, feeding back nothing.

The process of the base station equipment in this situation is the same as the above regulated process, and details are omitted here.

According to the above improved process, in the situation shown in Figure 9, NACK is fed back in PUCCH_2 to inform BS that last two transport blocks are received correctly, thereby reducing unnecessary retransmission as far as possible.

A situation where one transport block is transmitted in one subframe is described in the above example. In another alternate implementation manner of the method 300 shown in Figure 3, the base station equipment may transmit two transport blocks to the terminal equipment in one downlink subframe, each transport block being included in one of the two code words. In this case, by the following process, an uplink response signal is generated, and the transport block corresponding to the PUCCH through which the uplink response signal is fed back is determined.

The terminal equipment (for example, a user equipment UE) performs a flag setting process for each code word:
■ if it is found that the indicator sequence related to the code word begins with an ACK
   ◆ setting for the code word, a correct reception flag ACK at the position of the last ACK of at least one ACK that begins with the ACK and that is continuous in the forward direction, the flag indicating that BS is informed that the transport bock related to at least one continuous ACK including the ACK is received correctly..
■ if it is found that the indicator sequence related to the code word does not begin with an ACK
   ◆ setting, for the code word, an incorrect reception flag NACK, the NACK indicating that BS is informed that none of transport blocks included in the code word is received correctly.
■ performing based on the result of the flag setting process, a process of:
   ◆ if one of the two flags set for two code words is an ACK, combining the ACK set with respect to one code word and the NACK set with respect to the other code word as uplink response signal components respectively to form an uplink response signal (ACK, ACK) or (NACK, ACK), and determining that the uplink response signal is to be fed back through the PUCCH corresponding to the position of the ACK.
   ◆ if flags set for two code words are ACK, then:
      ● if the setting positions of the two flags ACK correspond to the same feedback channel PUCCH, combining the two ACKs set with respect to two code words as uplink response signal components respectively to form the uplink response signal (ACK, ACK), and determining that the uplink response signal is to be fed back through the PUCCH.
      ● if the setting positions of the two flags ACK correspond to different feedback channels PUCCHs, taking consideration situations of the two code words comprehensively, combining two ACKs set for two code words as uplink response signal components respectively to form the uplink response signal (ACK, ACK) or combining ACK set for one code word and NACK set for the other code as uplink response components to form uplink response signal (NACK, ACK) or (ACK, NACK), in a manner by which the base station equipment can be notified of the largest amount of the transport block received correctly, and determining in said manner, through which PUCCH of said different PUCCHs the uplink response signal is to be fed back.
      ● If flags set for two code words are NACK, combining two NACKs as uplink response signal components respectively to form uplink response signal (NACK, NAKC), and determining that the uplink response signal is to be fed back through the PUCCH corresponding to the last transport block received correctly in the two code words.

The base station equipment performs the following processes for each code word of the terminal equipment:
■ if a signal component corresponding to the code word in the received uplink response signal is ACK, it is indicated that all are ACKs, that is, the base station equipment determines that a transport block corresponding to a continuous correct reception indicator related to the code word is received by the terminal equipment correctly, and the remaining transport block not decided as received correctly related to the code word is retransmitted.
■ if a signal component corresponding to the code word in the received uplink response signal is NACK, it is indicated that all are NACKs transmitted, that is, the base station equipment determines that all transport blocks related to the code word are not received by the terminal equipment correctly, and all transport blocks related to the code word are retransmitted.
■ if noting is received, the base station equipment determines that no transport block related to the code word is received by the terminal equipment correctly, and then all transport blocks are retransmitted.

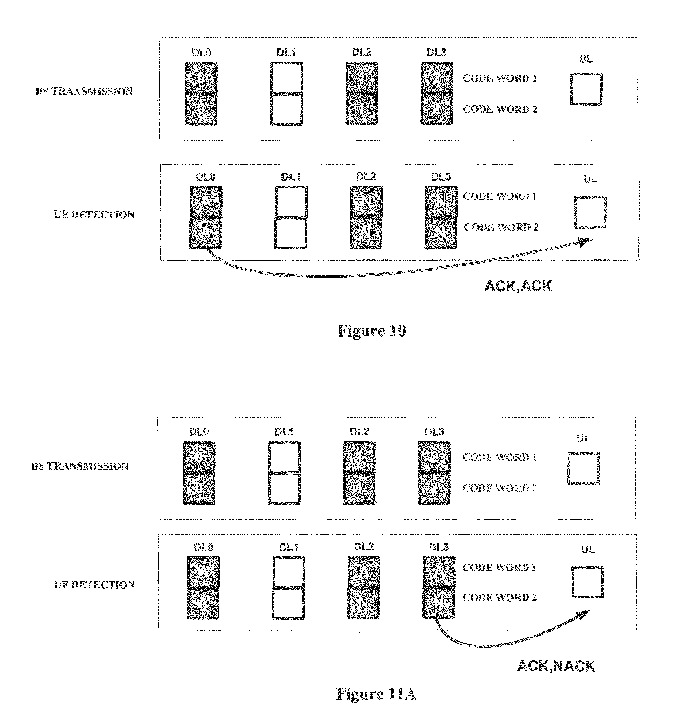

Figures 10 and 11A-11B show an implementation process of three specific examples of the alternative embodiment of the method shown in Figure 3. As shown in the Figures, BS transmits two transport blocks to UE in one downlink subframe, and at UE, start transport blocks of the two code words are detected as received correctly.

In the situation shown in Figure 10, the transmitted detection results all begin with a correct reception flag ACK, and according to the above process, a correct reception flag ACK is set for both code words, and the setting positions of the two flags ACK are the same, both at the first subframe DL0. Accordingly, an uplink response signal (ACK, ACK) is obtained by combining the two ACK, and is transmitted in PUCCHO corresponding to DL0. The base station will retransmit the second and the third transport blocks included in the code words 1 and 2 according to the uplink response signal.

In the situation shown in Figure 11 A, the transmitted detection results all begin with a correct reception flag ACK, and according to the above process, a correct reception flag ACK is set for both code words. In this case, flag ACK set for code word 2 may be modified (that is, reset) into NACK, to obtain an uplink response signal (ACK, NACK) by combining the ACK and the NACK in a manner of indicating that the transport blocks are transmitted correctly as much as possible. Correspondingly, an uplink response signal (ACK, NACK) is transmitted in PUCCH 3 corresponding to the third downlink subframe DL 3. The base station will retransmit the first, the second and the third transport blocks included in the code word 2 according to the uplink response signal.

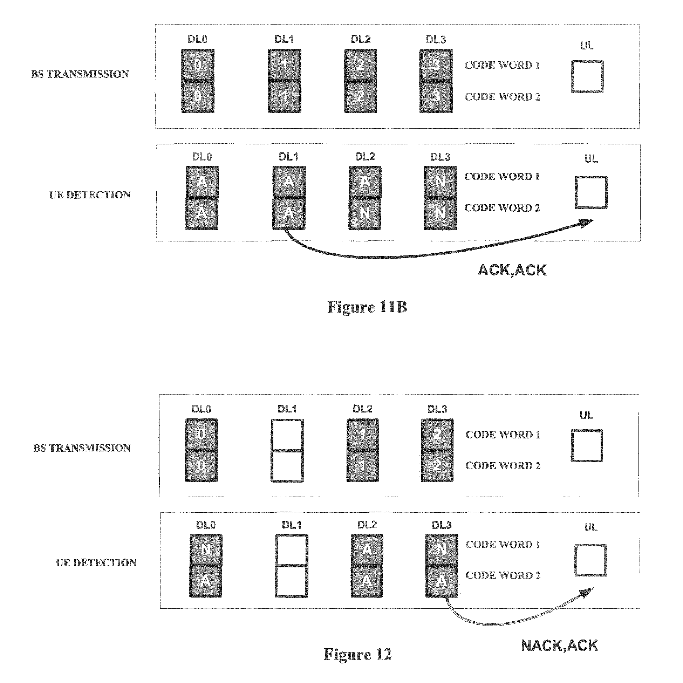

In the situation of another example shown in Figure 11B, similar to Figure 11A, transmitted results all being with a correct reception flag ACK. An indicator sequence corresponding to the first code is "A, A, A, N", an indicator sequence corresponding to the second code word is "A, A, N, N". If only the numbers of the ACK corresponding to code words are compared, (ACK, NACK) may be fed back in PUCCH corresponding to the third downlink subframe DL3, for indicating that the first three transport blocks included in the first code word are received correctly. In case of comprehensive consideration, if (ACK, ACK) is transmitted in PUCCH corresponding to the second downlink subframe DL2, it may be determined at the base station equipment that four transport blocks are received correctly.

As can be seen from the above, the manner shown in Figures 11A-11B is a manner where ACKs are fed back as much as possible. In this manner, correctly transmitted transport blocks may be indicated as far as possible to further reduce retransmission and improve data transmission efficiency.

Figure 12 shows an implementation process of another specific example of the alternative embodiment of the method shown in Figure 3, wherein a start transport block of one of the code words is detected as received correctly. In this case, according to the above process, NACK and ACK are set respectively for code word 1 and code word 2, and two flags are combined to obtain an uplink response signal (NACK, ACK), and (NACK, ACK) is transmitted in PUCCH 3 corresponding to the third subframe DL3. The base station retransmits only all transport blocks included in the code word 1 according to the uplink response signal.

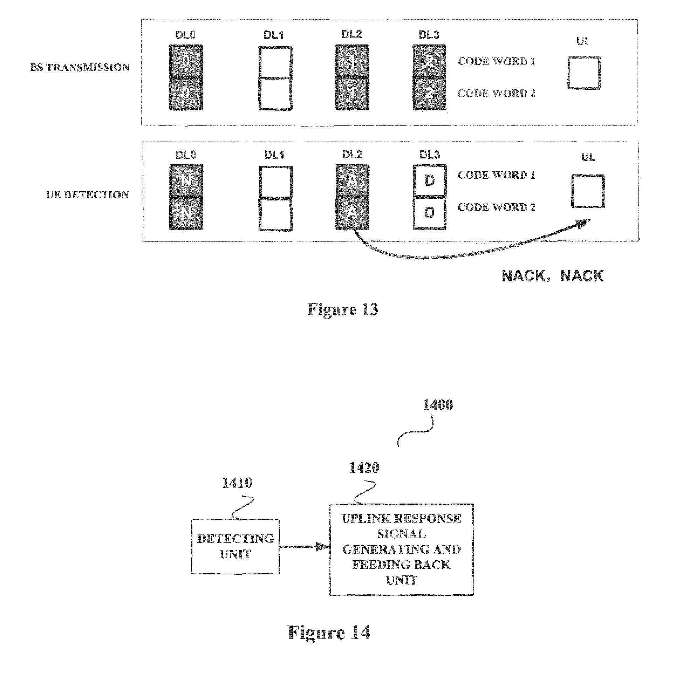

Figure 13 shows an implementation process of another specific example of the alternative embodiment of the method shown in Figure 3, wherein start transport blocks of both code words are detected as received incorrectly, in this case, according to the above process, NACK is set for both code word 1 and code word 2, and two flags are combined to obtain an uplink response signal (NACK, NACK), and (NACK, NACK) is transmitted in PUCCH 2 corresponding to the second subframe DL2. The base station will retransmit all transport blocks included in code word 1 and code word 2.

It is easily understood that in examples described in Figures 10-13, the correct reception flag ACK and the incorrect reception flag NACK set for each code word are only illustrative rather than restrictive. According to actual requirements, any other suitable signal allowed by the system configuration condition may be used as the correct reception flag and the incorrect reception flag, as long as both the base station and the terminal equipment are aware of the meaning of the flag.

It needs to note that although it is mentioned above that the ACK/NACK bundling is mainly applied to users in marginal community and scenes in TDD configuration 5, those skilled in the art appreciate that the ACK/NACK bundling according to an embodiment of the disclosure may also be applied to users in non-marginal community and scenes in non TDD configuration 5 having better communication quality in case of a need. In addition, each embodiment is described in the content of LET-TDD, the application field of the disclosure is not limited, and the method may also be applied to other similar system or scene where the uplink response signal needs to be fed back by the bundling manner.

Figure 14 is a structure simplifying diagram showing a terminal equipment 1400 implementing a feedback of the uplink response signal according to an embodiment of the disclosure. As shown in Figure 14, the terminal equipment 1400 comprises: a detecting unit 1410 configured to detect the reception situation of at least one transport block transmitted by a base station equipment in a predetermined order via at least one downlink subframe, and generate, with respect to each transport block, a correct reception indicator (ACK) indicating that the transport block is received correctly, an incorrect reception indicator (NACK)) indicating that the transport block is not received correctly, or another indicator indicating any other reception situation, according to the reception situation; an uplink response signal generating and feeding back unit 1420 configured to generate an uplink response signal according to the position and the amount of the generated correct reception indicator or indicators in an indicator sequence, determine which transport block corresponds to the physical uplink control channel (PUCCH) through which said uplink response signal is to be fed back, and feed back the uplink response signal to said base station equipment through the determined PUCCH via one uplink subframe corresponding to said at least one down link subframe, wherein the indicator sequence consists of the correct reception indicator, the incorrect reception indicator and the another indicator, which are generated by said terminal equipment, in the predetermined order.

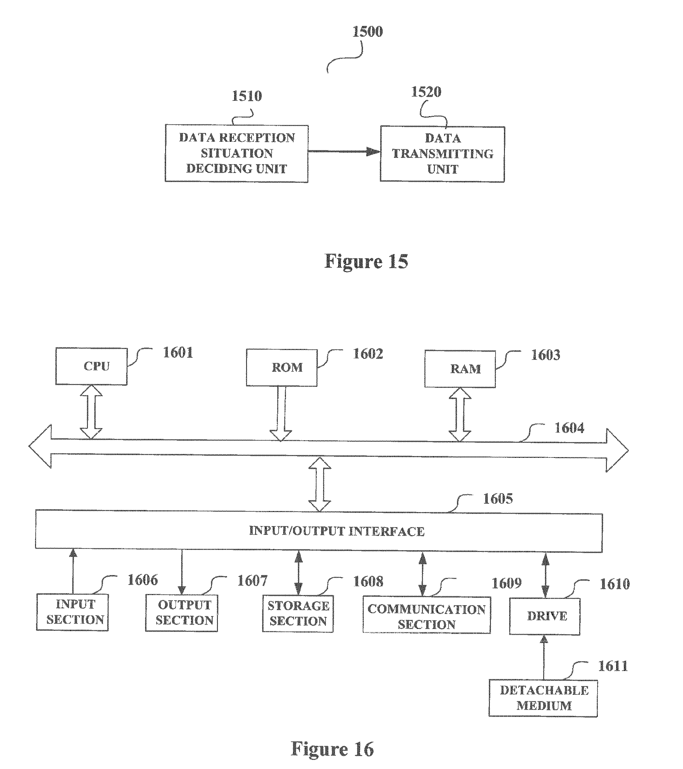

Figure 15 is a structure simplifying diagram showing a base station equipment 1500 transmitting data according to an uplink response signal fed back by the terminal equipment according to an embodiment of the disclosure. The base station equipment 1500 comprises a data transmitting unit 1510 configured to transmit at least one transport block to a terminal equipment in a predetermined order via at least one downlink subframe; a data reception situation deciding unit 1520 configured to decide which of at least one transport block is received by the terminal equipment correctly, according to an uplink response signal fed back by the terminal equipment through a corresponding physical uplink control channel PUCCH via one uplink subframe corresponding to the at least one downlink subframe, wherein the data transmitting unit 1520 selectively retransmits the transport block or blocks not decided by said data reception deciding unit as received correctly.

The configurations and the operations of the terminal equipment 1400 and the base station equipment 1500 of Figure 15 as well as the components may be implemented by the terminal equipment and the base station equipment involved in the above detailed description of Figures 3-13. As to specific details, please refer to descriptions of Figures 3-13, and detailed information are omitted here. In addition, for the sake of conciseness, other usual components of the terminal equipment 1400 and the base station equipment 1500 are not shown one by one to avoid blurring the specific functions and configurations of the terminal equipment 1400 and the base station equipment 1500 according to an embodiment of the disclosure.

The terminal equipment and the base station equipment according to an embodiment as well as the components may be implemented by software, hardware, firmware or any combination thereof.

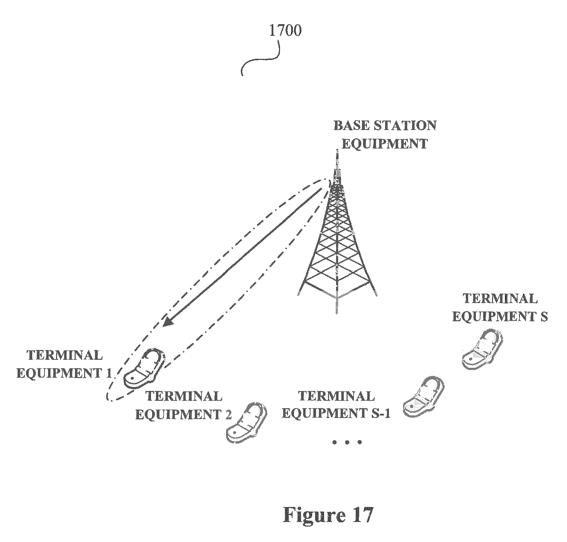

Figure 17 shows a structure diagram showing a communication system 1700 according to other embodiment of the disclosure, the system comprising at least one terminal equipment (terminal equipments 1 to S) and a base station equipment which can execute the method for transmitting an unlink response signal in the communication system according to an embodiment of the disclosure with terminal equipments 1-S. For example, the base station equipment and the terminal equipment included in the system 1700 may have configurations shown in Figure 15 and 14, respectively, and can execute the method for transmitting an uplink response signal described in detail in Figures 3-13. As to specific details, please refer to descriptions of those figures, and detailed information is omitted here. It needs to note that although for the sake of conciseness, Figure 17 shows only data transmission process is being performed between the base station equipment and the terminal equipment 1 (including the method for transmitting an uplink response signal), those skilled in the art appreciate that the base station equipment may execute data transmission process with any of or all the terminal equipments 1-S.

Detail descriptions have been given by block diagrams, flowchart and/or embodiments to explain different implementation manners of the equipment and/or the method according to an embodiment of the disclosure. When the block diagrams, flowcharts and/or embodiments include one or more functions and/or processes, those skilled in the art appreciate that functions and/or process of those block diagrams, flowcharts and/or embodiments may be implemented by various hardware, software, firmware or any substantive combination individually or cooperatively. In one embodiment, several sections of the subject matter described in the Description may be implemented by an Application Specific Integrated Circuit (ASIC), a Field Programmable Gate Array (FPGA), a Digital Signal Processor (DSP) or in other integrating manner. However, those skilled in the art appreciate that some aspects of the implementation manners described in the Description may be implemented equivalently wholly or partially in the integration circuit in the form of one or more computer programs running on one or more computers (for example, in the form of one or more programs running on one or more computers), in the form of a firmware, or any substantive combination thereof, and according to the contents disclosed in the Description, those skilled in the art are able to design a circuit for the disclosure and write a code for the software and/or firmware for the disclosure.

For example, the terminal equipment 1400, the base station equipment 1500 and the communication system 1700 shown above as well as the various composition modules, units, subunits may be configured by software, firmware, hardware or any other combination. In case of implementation by software or firmware, a program of the software may be mounted to a computer having a dedicated hardware structure from a storage medium or network (for example, the universal computer 1600 shown in Figure 16), when mounted with various programs, the computer can execute various functions.

Figure 16 shows a structure diagram showing a universal computer system for implementing the method and the equipment according to an embodiment of the disclosure. The computer system 1600 is only an example, not suggesting a limitation to the use range or function of the method and the equipment of the disclosure. It shall not be explained that the computer system 1600 depends on or requires any components or their combination shown in the illustrative operation system 1600.

In Figure 16, a central processing unit (CPU) 1601 performs various processes according to the program stored in the Read-Only Memory (ROM) 1602 or programs load from the storage section 1608 to the Random Access Memory (RAM) 1603. In the RAM 1603, store also data required when the CPU 1601 performs various processes. CPU 1601, ROM 1602 and RAM 1603 are connected from one to another via bus 1604. Input/output interface 1605 is also connected to the bus 1604.

The following components are connected to the input/output interface 1605: an input section 1606, including a keyboard, a mouse, etc.; an output section 1607, including a display, such as a cathode ray tube (CRT), a liquid crystal display (LCD), etc., and speakers and so on; a storage section 1608, including hard disc, etc.; and a communication part 1609, including network interface cards such as LAN cards, modems and so on. The communication section 1609 performs communication process via network like the internet. According to requirements, a drive 1160 is also connected to the input/output interface 1605. A detachable medium 1611 such as disc, CD, magneto-optical disc, semiconductor memory, and so on is installed on the drive 1610 based on requirements, such that the computer program read out therefrom is installed in the storage section 1608 based on requirements.

In case of implementing the above steps and processes by software, programs constituting the software are installed from a network like the Internet or from a storage medium like the detachable medium 1611.

Those skilled in the art should be understood that such storage medium is not limited to the detachable medium 1611 which is stored with programs and distributes separate from the method to provide a user with program as shown in Figure 16. The example of the detachable medium 1611 includes disc, CD (including CD read only memory (CD-ROM) and digital versatile disc (DVD)), magneto-optical disc (including mini-disc (MD)) and semiconductor memory. Alternatively, the storage medium may be ROM 1602, or hard disc included in the storage section 1608 in which a program is stored and the program is distributed to a user with the method including the same.

Therefore, the disclosure further provides a program product comprising machine readable instruction code. When read and executed by a machine, the instruction codes are capable of executing the method for transmitting an uplink response signal in the communication system according to an embodiment of the disclosure. Correspondingly, various storage media for carrying the program product as listed above are also included in the disclosure of the disclosure.

In the above description of the specific embodiments, features described and/or shown for one embodiment may be used in one or more other embodiments in the same or similar manner, combined with features in other embodiments, or replaced with features in other embodiments.

It shall be emphasized that the technical term "comprise/include" is used here to refer to an existence of a feature, an element, a step or a component, without excluding existences or attachments of one or more other features, elements, steps or components. The terms "first", "second", etc. relating to the ordinal does not indicate the implementing order or the importance degree of the features, elements , steps or components defined by the terms, and are only for identifying the features, elements, steps or components for the sake of clear description.

In addition, the method of embodiments of the disclosure is not limited to be executed in the temporal order described in the Description or shown in the Figures, and may be executed in other temporal order in parallel or independently. Therefore, the execution order of the method described in the Description does not limit the technical range of the disclosure.

Although the disclosure has been disclosed by description of the specific embodiments of the disclosure, it shall be understood that those skilled in the art may design various modifications, improvements or equivalents for the disclosure within the spirit and scope of the attached claims. It shall also be deemed that those modifications, improvements or equivalents are included in the scope of the disclosure.

## Claims

1. A method for transmitting uplink response signal in a communication system, comprising:
detecting, by a terminal equipment, the reception situation of at least one transport blocks transmitted by a base station equipment in a predetermined order via at least one downlink subframes, and generating, by the terminal equipment, with respect to each transport block, a correct reception indicator (ACK) indicating that the transport block is received correctly, an incorrect reception indicator (NACK) indicating that the transport block is not received correctly, or another indicator indicating any other reception situation, according to the reception situation;
generating, by said terminal equipment, uplink response signal according to the position and the amount of the generated correct reception indicator or indicators in an indicator sequence, determining, by said terminal equipment, which transport block corresponds to the physical uplink control channel (PUCCH) through which said uplink response signal is to be fed back, and feeding back, by said terminal equipment, said uplink response signal to said base station equipment through the determined PUCCH via one uplink subframe corresponding to said at least one downlink subframes, wherein said indicator sequence consists of the correct reception indicator, the incorrect reception indicator and the another indicator, which are generated by said terminal equipment, in said predetermined order; and
selectively retransmitting, by said base station equipment, specific transport block or blocks of said at least one transport blocks based on the fed back uplink response signal.

2. The method according to Claim 1, wherein each of said at least one transport block is transmitted to said terminal equipment via one downlink subframe, and a direction from the first indicator to the last indicator in said indicator sequence indicates a forward direction while an opposite direction thereof indicates a backward direction, and wherein said process of generating uplink response signal and determining which transport block corresponds to the PUCCH through which said uplink response signal is fed back comprises:
if said indicator sequence begins with a correct reception indicator, then generating, by said terminal equipment, a forward correct reception signal as said uplink response signal, which forward correct reception signal indicating that the transport block or blocks related to continuous N1 correct indicator or indicators in said indicator sequence which begin with said correct reception indicator and end with the last correct reception indicator in said forward direction are received correctly, and determining, by said terminal equipment, that said uplink response signal is to be fed back through the PUCCH corresponding to the transport block related to said last correct reception indicator, where N1 is a positive integer equal to or larger than 1; and
if said indicator sequence does not begin with a correct reception indicator, then:
in the case where the indicator related to the transport block in the last downlink subframe of said at least one downlink subframes is a correct reception indicator, generating, by said terminal equipment, a backward correct reception signal as said uplink response signal, which backward correct reception signal indicating that the transport block or blocks related to continuous M1 correct reception indicator or indicators in said indicator sequence which begin with said correct reception indicator and end with the last correct reception indicator in said backward direction are received correctly, and determining, by said terminal equipment, that said uplink response signal is to be fed back through the PUCCH corresponding to the transport block related to said last correct reception indicator, where M1 is a positive integer equal to or larger than 1; and
in the case where the indicator related to the transport block in the last downlink subframe of said at least one downlink subframes is not a correct reception indicator, not generating any uplink response signal.

3. The method according to Claim 1, wherein each of said at least one transport blocks is transmitted to said terminal equipment via one downlink subframe, and a direction from the first indicator to the last indicator in said indicator sequence indicates a forward direction while an opposite direction thereof indicates a backward direction, and wherein said process of generating uplink response signal and determining which transport block corresponds to the PUCCH through which said uplink response signal is fed back comprises:
if said indicator sequence begins with a correct reception indicator, then:
in the case where the indicator related to the transport block in the last downlink subframe of said at least one downlink subframes is not a correct reception indicator, generating, by said terminal equipment, a forward correct reception signal as said uplink response signal, which forward correct reception signal indicating that the transport block or blocks related to continuous N2 correct indicator or indicators in said indicator sequence which begin with said correct reception indicator and end with the last correct reception indicator in said forward direction are received correctly, and determining, by said terminal equipment, that said uplink response signal is to be fed back through the PUCCH corresponding to the transport block related to said last correct reception indicator, where N2 is a positive integer equal to or larger than 1; and
in the case where the indicator related to the transport block in the last downlink subframe of said least one downlink subframes is another correct reception indicator, then:
comparing, in said indicator sequence, a first amount of the correct reception indicator or indicators which begin with said correct reception indicator and are continuous in said forward direction and a second amount of the correct reception indicator or indicators which begin with said another correct reception indicator and are continuous in said backward direction,
if the first amount is equal to or larger than the second amount, then generating, by said terminal equipment, a forward correct reception signal as said uplink response signal, which forward correct reception signal indicating that the transport block or blocks related to continuous N3 correct indicator or indicators in said indicator sequence which begin with said correct reception indicator and end with the last correct reception indicator in said forward direction are received correctly, and determining, by said terminal equipment, that said uplink response signal is to be fed back through the PUCCH corresponding to the transport block related to said last correct reception indicator, and
if the first amount is smaller than the second amount, then generating, by said terminal equipment, a backward correct reception signal as said uplink response signal, which backward correct reception signal indicating that the transport block or blocks related to continuous M2 correct reception indicator or indicators in said indicator sequence which begin with said another correct reception indicator and end with the last correct reception indicator in said backward direction are received correctly, and determining, by said terminal equipment, that said uplink response signal is to be fed back through the PUCCH corresponding to the transport block related to said last correct reception indicator, where both N3 and M2 are positive integers equal to or larger than 1; and
if said indicator sequence does not begin with a correct reception indicator, then:
in the case where the indicator related to the transport block in the last downlink subframe of said at least one downlink subframes is a correct reception indicator, generating a backward reception signal as said uplink response signal, which backward reception signal indicating that the transport block or blocks related to continuous M3 correct reception indicator or indicators in said indicator sequence which begin with said correct reception indicator and end with the last correct reception indicator in said backward direction are received correctly, and determining, by said terminal equipment, that said uplink response signal is to be fed back via the PUCCH corresponding to the transport block related to said last one correct reception indicator, where M3 is a positive integer equal to or larger than 1; and
in the case where the indicator related to the transport block in the last downlink subframe of said at least one downlink subframes is not a correct reception indicator, not generating any uplink response signal.

4. The method according to Claim 2 or 3, wherein the process of selectively retransmitting, by the base station, the specific transport block or blocks of said at least one transport blocks based on the fed back uplink response signal comprises:
if said uplink response signal is the forward correct reception signal, then deciding, by said base station, that the transport block corresponding to the PUCCH for transmitting said uplink response signal and all other transport block or blocks from said transport block in the backward direction are received by said terminal equipment correctly, and retransmitting, by said base station, remaining transport block or blocks not decided as received correctly of said at least one transport blocks;
if said uplink response signal is the backward correct reception signal, then deciding, by said base station, that the transport block corresponding to the PUCCH for transmitting said uplink response signal and all other transport blocks from said transport block in the forward direction are received by said terminal equipment correctly, and retransmitting, by said base station, remaining transport block or blocks not decided as received correctly of said at least one transport blocks; and
if no uplink response signal is received, then deciding, by said base station, that no transport block is received correctly, and retransmitting, by said base station, all of said at least one transport blocks.

5. The method according to Claim 1, wherein each two of said at least one transport blocks are transmitted to said terminal equipment via one downlink subframe, each transport block is contained in a first code word or a second code word respectively, with respect to each code word, the indicator sequence related to that code word consists of the correct reception indicator, the incorrect reception indicator and the another indicator which are related to all the transport block or blocks in that code word respectively, and a direction from the first indicator to the last indicator of that indicator sequence indicates a forward direction while an opposite direction thereof indicates a backward direction, and wherein said process of generating uplink response signal and determining which transport block corresponds to the PUCCH through which said uplink response signal is fed back comprises:
performing, with respect to each of the first code word and the second code word, a flag setting process of:
if the indicator sequence related to that code word begins with a correct reception indicator, then setting, for that code word, a correct reception flag at the position of the last correct reception indicator of N4 correct reception indicator or indicators in said indicator sequence which begin with said correct reception indicator and are continuous in said forward direction, said correct reception flag indicating that the transport block or blocks related to said continuous N4 correct reception indicator or indicators are received correctly, where N4 is a positive integer equal to or larger than 1; if said indicator sequence does not begin with a correct reception indicator, then setting, for that code word, an incorrect reception flag indicating that all the transport block or blocks contained in that code word are not received correctly; and
performing, based on the result of the flag setting process, a process of:
if only one of the flags set for said first code word and said second code word is the correct reception flag, then combining the correct reception flag set with respect to one of the two code words and the incorrect reception flag set with respect to the other code word as uplink response signal components respectively to form said uplink response signal, and determining that said uplink response signal is to be fed back through the PUCCH corresponding to the position of said correct reception flag;
if both of the flags set for said first code word and said second code word are the correct reception flags, then:
in the case where the positions of the correct reception flags set for the first code word and the second code word correspond to the same PUCCH, combining the two correct reception flags set with respect to said two code words as uplink response signal components respectively to form said uplink response signal, and determining that said uplink response signal is to be fed back through said PUCCH;
in the case where the positions of the correct reception flags set for the first code word and the second code word correspond to different PUCCHs, combining the two correct reception flags set with respect to said two code words or combing the correct reception flag set with respect to one of the first code word and the second code word and an incorrect reception flag reset for another one of the first code word and the second code word, as uplink response signal components respectively, to form said uplink response signal, in a manner by which said base station equipment can be notified of the largest amount of the transport block or blocks received correctly, and determining, in said manner, through which PUCCH of said different PUCCHs the uplink response signal is to be fed back;
if both of the flags set for said first code word and said second code word are the incorrect reception flags, then combining said two incorrect reception flags as uplink response signal components respectively to form said uplink response signal, and determining that said uplink response signal is to be fed back through the PUCCH corresponding to the last transport block received correctly in said two code words.

6. The method according to Claim 5, wherein the process of selectively retransmitting, by the base station equipment, the specific transport block or blocks based on the fed back uplink response signal comprises:
performing, with respect to each code word at the terminal equipment side, a process of:
if the uplink response signal component which is contained in said uplink response signal and related to that code word is the correct reception flag, then deciding, by said base station equipment, that the transport block or blocks corresponding to the continuous N4 correct reception indicator or indicators related to that code word are received by said terminal equipment correctly, and retransmitting, by said base station equipment, remaining transport block or blocks which are related to that code word and not decided as received correctly;
if the uplink response signal component which is contained in said uplink response signal and related to that code word is the incorrect reception flag, then deciding, by said base station equipment, that all the transport block or blocks related to that code word are not received by said terminal equipment correctly, and retransmitting, by said base station equipment, all the transport block or blocks related to that code word; and
if no uplink response signal is received, then deciding, by said base station equipment, that all the transport blocks contained in said two code words are not received by said terminal equipment correctly, and retransmitting, by said base station, all the transport blocks.

7. A terminal equipment, comprising:
detecting unit configured to detect the reception situation of at least one transport blocks transmitted by a base station equipment in a predetermined order via at least one downlink subframe, and to generate, with respect to each transport block, a correct reception indicator (ACK) indicating that that transport block is received correctly, an incorrect reception indicator (NACK) indicating that that transport block is not received correctly, or another indicator indicating any other reception situation, according to the reception situation;
uplink response signal generating and feeding back unit configured to generate an uplink response signal according to the position and the amount of the generated correct reception indicator or indicators in an indicator sequence, to determine which transport block corresponds to the physical uplink control channel PUCCH through which said uplink response signal is to be fed back, and to feed back said uplink response signal to said base station equipment through the determined PUCCH via one uplink subframe corresponding to said at least one downlink subframes, wherein said indicator sequence consists of the correct reception indicator, the incorrect reception indicator and the another indicator, which are generated by said detecting unit, in said predetermined order.

8. The terminal equipment according to Claim 7, wherein each of said at least one transport blocks is transmitted to said terminal equipment via one downlink subframe, and a direction from the first indicator to the last indicator in said indicator sequence indicates a forward direction while an opposite direction thereof indicates a backward direction, and wherein said uplink response signal generating and feeding back unit is configured to:
if said indicator sequence begins with a correct reception indicator, then generate a forward correct reception signal as said uplink response signal, which forward correct reception signal indicating that the transport block or blocks related to continuous K1 indicator or indicators in said indicator sequence which begin with said correct reception indicator and end with the last correct reception indicator in said forward direction are received correctly, and determine that said uplink response signal is to be fed back through the PUCCH corresponding to the transport block related to said last correct reception indicator, where K1 is a positive integer equal to or larger than 1; and
if said indicator sequence does not begin with a correct reception indicator, then:
in the case where the indicator related to the transport block in the last downlink subframe of said at least one downlink subframes is a correct reception indicator, generate a backward correct reception signal as said uplink response signal, which backward correct reception signal indicating that the transport block or blocks related to continuous L1 correct reception indicator or indicators in said indicator sequence which begin with said correct reception indicator and end with the last correct reception indicator in said backward direction are received correctly, and determine that said uplink response signal is to be fed back through the PUCCH corresponding to the transport block related to said last correct reception indicator, where L1 is a positive integer equal to or larger than 1; and
in the case where the indicator related to the transport block in the last downlink subframe of said at least one downlink subframes is not a correct reception indicator, not generate any uplink response signal.

9. The terminal equipment according to Claim 7, wherein each of said at least one transport blocks is transmitted to said terminal equipment via one downlink subframe, and a direction from the first indicator to the last indicator in said indicator sequence indicates a forward direction while an opposite direction thereof indicates a backward direction, and wherein said uplink response signal generating and feeding back unit is configured to:
if said indicator sequence begins with a correct reception indicator, then:
in the case where the indicator related to the transport block in the last downlink subframe of said at least one downlink subframes is not a correct reception indicator, generate a forward correct reception signal as said uplink response signal, which forward correct reception signal indicating that the transport block or blocks related to continuous K2 indicator or indicators in said indicator sequence which begin with said correct reception indicator and end with the last correct reception indicator in said forward direction are received correctly, and determine that said uplink response signal is to be fed back through the PUCCH corresponding to the transport block related to said last correct reception indicator, where K2 is a positive integer equal to or larger than 1; and
in the case where the indicator related to the transport block in the last downlink subframe of said least one downlink subframes is another correct reception indicator:
compare, in said indicator sequence, a first amount of the correct reception indicator or indicators which begin with said correct reception indicator and are continuous in said forward direction and a second amount of the correct reception indicator or indicators which begin with said another correct reception indicator and are continuous in said backward direction;
if the first amount is equal to or larger than the second amount, then generate a forward correct reception signal as said uplink response signal, which forward correct reception signal indicating that the transport block or blocks related to continuous K3 indicator or indicators in said indicator sequence which begin with said correct reception indicator and end with the last correct reception indicator in said forward direction are received correctly, and determine that said uplink response signal is to be fed back through the PUCCH corresponding to the transport block related to said last correct reception indicator; and
if the first amount is smaller than the second amount, then generate a backward reception signal as said uplink response signal, which backward reception signal indicating that the transport block or blocks related to continuous L2 correct reception indicator or indicators in said indicator sequence which begin with said another correct reception indicator and end with the last correct reception indicator in said backward direction are received correctly, and determine that said uplink response signal is to be fed back through the PUCCH corresponding to the transport block related to said last correct reception indicator, where both K3 and L2 are positive integers equal to or larger than 1; and
if said indicator sequence does not begin with a correct reception indicator, then:
in the case where the indicator related to the transport block in the last downlink subframe of said at least one downlink subframes is a correct reception indicator, generate a backward reception signal as said uplink response signal, which backward reception signal indicating that the transport block or blocks related to continuous L3 correct reception indicator or indicators in said indicator sequence which begin with said correct reception indicator and end with the last correct reception indicator in said backward direction are received correctly, and determine that said uplink response signal is to be fed back via the PUCCH corresponding to the transport block related to said last transport block, where L3 is a positive integer equal to or larger than 1; and
in the case where the indicator related to the transport block in the last downlink subframe of said at least one downlink subframes is not a correct reception indicator, not generate any uplink response signal.

10. The terminal equipment according to Claim 7, wherein each two of said at least one transport blocks are transmitted to said terminal equipment via one downlink subframe, each transport block is contained in a first code word or a second code word respectively, with respect to each code word, the indicator sequence related to that code word consists of the correct reception indicator, the incorrect reception indicator and the another indicator which are related to all the transport block or blocks in that code word respectively, and a direction from the first indicator to the last indicator of that indicator sequence indicates a forward direction while an opposite direction thereof indicates a backward direction, and wherein said uplink response signal generating and feeding back unit is configured to:
perform, with respect to each of the first code word and the second code word, a flag setting process of:
if the indicator sequence related to that code word begins with a correct reception indicator, then setting, for that code word, a correct reception flag at the position of the last correct reception indicator of K4 correct reception indicator or indicators in said indicator sequence which begin with said correct reception indicator and are continuous in said forward direction, which correct reception flag indicating that the transport block or blocks related to said continuous K4 correct reception indicator or indicators are received correctly, where K4 is a positive integer equal to or larger than 1; if that indicator sequence does not begin with a correct reception indicator, then setting, for that code word, a incorrect reception flag which indicates that all the transport block or blocks contained in that code word are not received correctly; and
perform, based on the result of the flag setting process, a process of:
if only one of the flags set for said first code word and said second code word is the correct reception flag, then combining the correct reception flag set with respect to one of the two code words and the incorrect reception flag set with respect to the other code word as uplink response signal components respectively to form said uplink response signal, and determining that said uplink response signal is to be fed back through the PUCCH corresponding to the position of said correct reception flag;
if both of the flags set for said first code word and said second code word are the correct reception flags, then:
in the case where the positions of the correct reception flags set for the first code word and the second code word correspond to the same PUCCH, combining the two correct reception flags set with respect to said two code words as uplink response signal components respectively to form said uplink response signal, and determining that said uplink response signal is to be fed back through said PUCCH;
in the case where the positions of the correct reception flags set for the first code word and the second code word correspond to different PUCCHs, combining the two correct reception flags set with respect to said two code words or combing the correct reception flag set with respect to one of the first code word and the second code word and an incorrect reception flag reset for another one of the first code word and the second code word, as uplink response signal components respectively, to form said uplink response signal, in a manner by which said base station equipment can be notified of the largest amount of the transport block or blocks received correctly, and determining, in said manner, through which PUCCH of said different PUCCHs the uplink response signal is to be fed back;
if both of the flags set for said first code word and said second code word are incorrect reception flags, then combining said two incorrect reception flags as uplink response signal components respectively to form said uplink response signal, and determining that said uplink response signal is to be fed back through the PUCCH corresponding to the last transport block received correctly in said two code words.

11. A base station equipment, comprising:
data transmitting unit configured to transmit at least one transport blocks to a terminal equipment in a predetermined order via at least one downlink subframes;
data reception situation deciding unit configured to decide which of said at least one transport blocks are received by said terminal equipment correctly, according to an uplink response signal fed back by said terminal equipment through a corresponding physical uplink control channel PUCCH via one uplink subframe corresponding to said at least one downlink subframes; and
wherein said data transmitting unit selectively transmits the transport block or blocks not decided by said data reception deciding unit as received correctly.

12. The base station equipment according to Claim 11, wherein each of said at least one transport blocks is transmitted to said terminal equipment via one downlink subframe, an indicator sequence consists of a correct reception indicator (ACK) indicating that a transport block is received correctly, an incorrect reception indicator (NACK) indicating that a transport block is not received correctly and another indicator indicating any other reception situation which are generated with respect to each transport block of the at least one transport blocks transmitted to said terminal equipment by said base station equipment, and a direction from the first correct reception indicator to the last correct reception indicator in said indicator sequence indicates a forward direction while an opposite direction thereof indicates a backward direction, and wherein said data transmitting unit and said data reception situation deciding unit are configured to:
if the uplink response signal fed back by the terminal equipment is a forward correct reception signal, then decide, by said data reception situation deciding unit, that the transport block corresponding to the PUCCH for transmitting said uplink response signal and continuous Q1 transport block or blocks from said transport block in the backward direction are received by said terminal equipment correctly, and retransmit, by said data transmitting unit, remaining transport block or blocks not decided as received correctly of said at least one transport blocks to said terminal equipment, wherein said forward correct reception signal indicates that the transport block or blocks related to said continuous Q1 correct reception indicator or indicators which begin with the correct reception indicator at the start of said indicator sequence and end with the last correct reception indicator in said forward direction are received correctly, and wherein Q1 is a positive integer equal to or larger than 1;
if the uplink response signal fed back by the terminal equipment is a backward correct reception signal, then decide, by said data reception situation deciding unit, that the transport block corresponding to the PUCCH for transmitting said uplink response signal and continuous P1 transport block or blocks from said transport block in the forward direction are received by said terminal equipment correctly, and retransmit, by said data transmitting unit, remaining transport block or blocks not decided as received correctly of said at least one transport blocks to said terminal equipment, wherein said backward correct reception signal indicates that the transport block or blocks related to said continuous P1 correct reception indicator or indicators in said indicator sequence which begin with the correct reception indicator related to the transport block in the last downlink subframe of said at least one downlink subframes and end with the last correct reception indicator in said backward direction are received correctly, and wherein P1 is a positive integer equal to or larger than 1; and
if no uplink response signal is received, then decide, by said data reception situation deciding unit, that no transport block is received correctly, and retransmit, by said data transmitting unit, all of said at least one transport blocks to said terminal equipment.

13. The base station equipment according to Claim 11, wherein each two of said at least one transport blocks are transmitted to said terminal equipment via one downlink subframe, each transport block is contained in a first code word or a second code word respectively, and, with respect to each code word at the terminal equipment side, an indicator sequence corresponding to that code word consists of a correct reception indicator (ACK) indicating that a transport block is received correctly, an incorrect reception indicator (NACK) indicating that a transport block is not received correctly and another indicator indicating any other reception situation which are generated with respect to each transport block contained in that code word, and a direction from the first correct reception indicator to the last correct reception indicator in said indicator sequence indicates a forward direction while an opposite direction thereof indicates a backward direction, and wherein said data transmitting unit and said data reception situation deciding unit are configured to:
perform, with respect to each code word at the terminal equipment side, a process of:
if the uplink response signal component which is related to that code word and contained in the uplink response signal fed back by said terminal equipment is a correct reception flag, then deciding, by said data reception situation deciding unit, that the transport block or blocks corresponding to continuous Q2 correct reception indicator or indicators related to that code word are received by said terminal equipment correctly, and retransmitting, by said data transmitting unit, remaining transport block or blocks which are related to that code word and not decided as received correctly to said terminal equipment, wherein said correct reception flag indicates that the transport block or blocks related to said Q2 correct reception indicator or indicators which begin with the correct reception indicator at the start of said indicator sequence and are continuous in said forward direction are received correctly, where Q2 is a positive integer equal to or larger than 1;
if the uplink response signal component which is related to that code word and contained in the uplink response signal fed back by the terminal equipment is an incorrect reception flag, then deciding, by said data reception situation deciding unit, that all the transport block or blocks related to that code word are not received by said terminal equipment correctly, and retransmitting, by said data transmitting unit, all the transport block or blocks related to said code word to said terminal equipment, wherein said incorrect reception flag indicates that all the transport block or blocks contained in that code word are not received correctly; and
if no uplink response signal is received, then said data reception situation deciding unit is configured to decide that all the transport block or blocks contained in said first code word and second code word are not received by said terminal equipment correctly, and said data transmitting unit is configured to retransmit all the transport block or blocks to said terminal equipment.

14. A communication system comprising at least one terminal equipments and a base station equipment which can perform communication with said at least one terminal equipments, wherein said at least one terminal equipment and base station equipment are configured to implement the method recited in any one of claims 1-6.

15. A program product comprising machine readable instruction codes stored therein, wherein the instruction codes, when read and executed by a computer, are capable of causing the machine to execute the method according to any one of claims 1-6.

16. A machine readable storage medium with the program product according to claim 15 carried thereon.
